# EUROPEAN PATENT APPLICATION

(11) **EP 4 270 864 A1**
(43) Date of publication of application: **01.11.2023**
(21) Application number: 23169835.8
(22) Date of filing: 25.04.2023
(51) Int. Cl.: H04L 9/08, H04L 9/00, H04L 9/40

(54) **TRANSACTION AUTHORIZATION AND VERIFICATION THROUGH DISTRIBUTED-LEDGER-BASED CHAIN OF CUSTODY**

(30) Priority: 28.04.2022 US 202263336150 P; 12.04.2023 US 202318133993
(71) Applicant: Banqu, Inc., Minnetonka, MN 55345 (US)
(72) Inventor: Gadnis, Ashish, Minnetonka, Minnesota, 55345 (US); Keiser, Jeffrey A., Minnetonka, Minnesota, 55345 (US); Natalenko, Stanislav S., Minnetonka, Minnesota, 55345 (US)
(74) Representative: Grünecker Patent- und Rechtsanwälte PartG mbB

(57) **Abstract**

Systems, methods, and computer media for authenticating and verifying transactions using a distributed-ledger-based chain of custody are described herein. A transactable credit can be generated that represents establishment of a physical asset that is fixed to a geolocation. A decentralized chain of custody for the transactable credit can be established in a distributed ledger. The decentralized chain of custody can include information describing the establishment of the physical asset, the geolocation of the physical asset, and transaction information for transactions involving the physical asset. Transactions involving the transactable credit can be authorized using the decentralized chain of custody, and transaction information for such transactions can also be stored in the distributed ledger as part of the decentralized chain of custody.

## Description

### RELATED APPLICATIONS

The present application claims the benefit of U.S. Provisional Patent Application No. 63/336,150, filed April 28, 2022, the disclosure of which is hereby incorporated by reference.

### BACKGROUND

Blockchain technology has been used in contexts such as cryptocurrency exchange and smart contracts. Typically, blockchain technology provides a distributed ledger that records transactions in a verifiable, permanent way. A blockchain can be distributed across a network of computer systems called nodes. The nodes follow a protocol for communication between nodes, adding new blocks to the blockchain, and approving ("validating") the new blocks.

### SUMMARY

In summary, innovations described herein use a decentralized chain of custody implemented with a distributed ledger such as a permissioned blockchain. In some examples described herein, a transactable credit is generated that represents a physical asset fixed to a geolocation. Geolocation data indicating the geolocation of the physical asset, transaction data for transactions involving the transactable credit, and other data can be stored directly in the distributed-ledger-based chain of custody. With the geolocation data and "cradle-to-grave" distributed ledger tracking, the distributed-ledger-based chain of custody can be used to establish provenance of the transactable credit for the physical asset at the geolocation.

According to a first aspect of techniques and tools described herein, a computer system implements a distributed ledger trust network ("DLTN"). The computer system determines a geolocation of a physical asset based at least in part on a message sent by a client computing device (*e*.*g*., a smartphone, feature phone, or other mobile computing device). The physical asset is fixed to the geolocation, which, for example, may have been identified (a) using a global positioning system ("GPS") receiver of the client computing device while at the geolocation of the physical asset or (b) by cellular tower(s) in communication with the client computing device while at the geolocation of the physical asset.

The computer system generates a transactable credit representing establishment of the physical asset. The computer system establishes a decentralized chain of custody for the transactable credit in a distributed ledger (*e*.*g*., a permissioned blockchain). In doing so, the computer system stores, across one or more records of the distributed ledger for the transactable credit, asset data describing the physical asset, geolocation data describing the geolocation of the physical asset, and transactable credit data describing the transactable credit. In particular, the geolocation data is stored in a first record (such as a root record) among the record(s). The transactable credit data can be stored in the first record or in a record different than the first record. Each given record after the first record in the distributed ledger stores a hash value for the given record. The hash value for the given record logically links the given record to its previous record in the distributed ledger (that is, to the record immediately before the given record in the distributed ledger). This associates the given record, through the distributed ledger (that is, with hash values for respective records of the distributed ledger), with the geolocation data stored in the first record. For example, the hash value for a second record is computed using the data stored in the first record, the hash value for a third record is computed using the data stored in the second record (including the hash value of the second record), the hash value for a fourth record is computed using the data stored in the third record (including the hash value of the third record), and so on, such that the hash value for each record after the first record depends at least in part on the geolocation data. In this way, each of the given record(s) of the distributed ledger is associated with the geolocation of the physical asset in a transparent, verifiable, and immutable way in the decentralized chain of custody for the transactable credit.

The computer system authorizes a transaction involving the transactable credit using the decentralized chain of custody. For example, the computer system accesses the decentralized chain of custody in the distributed ledger, compares the geolocation of the physical asset (as indicated by the geolocation data stored in the decentralized chain of custody) to a geolocation provided in an authorization request for the transaction, and verifies that the transactable credit is owned by one party to the transaction. The computer system can also verify a redemption status or use status of the transactable credit.

The computer system stores transaction data for the transaction in the distributed ledger as part of the decentralized chain of custody. The transaction data is stored in a latest record of the distributed ledger. The latest record also stores a hash value that logically links the latest record to its previous record in the distributed ledger (that is, to the record immediately before the latest record in the distributed ledger). This associates the latest record, through the distributed ledger, with the geolocation data stored in the first record, for example, as described above. In this way, the latest record of the distributed ledger is associated with the geolocation of the physical asset in a transparent, verifiable, and immutable way in the decentralized chain of custody for the transactable credit.

According to a second aspect of techniques and tools described herein, a computer system that implements a DLTN determines a geolocation of a physical asset based at least in part on a message sent by a client computing device (*e*.*g*., a smartphone, feature phone, or other mobile computing device). The physical asset is fixed to the geolocation, which, for example, may have been identified (a) using a GPS receiver of the client computing device while at the geolocation of the physical asset or (b) by cellular tower(s) in communication with the client computing device while at the geolocation of the physical asset.

The computer system registers the physical asset in a credit transaction platform implemented using a distributed ledger (*e*.*g*., a permissioned blockchain) and generates a transactable credit representing establishment of the physical asset. The computer system maintains a decentralized chain of custody for the transactable credit directly in the distributed ledger through the credit transaction platform. In doing so, the computer system stores, across multiple records of the distributed ledger for the transactable credit, asset data describing the physical asset, geolocation data describing the geolocation of the physical asset, and transaction data describing transactions involving the transactable credit. In particular, the geolocation data is stored in a first record (*e*.*g*., root record) among the multiple records. Each given record after the first record in the distributed ledger stores a hash value for the given record. The hash value for the given record logically links the given record to its previous record in the distributed ledger (that is, to the record immediately before the given record in the distributed ledger). This associates the given record, through the distributed ledger (that is, with hash values for respective records of the distributed ledger), with the geolocation data stored in the first record, for example, as described above. In this way, each of the given record(s) of the distributed ledger is associated with the geolocation of the physical asset in a transparent, verifiable, and immutable way in the decentralized chain of custody for the transactable credit.

Upon receiving a request, through the credit transaction platform, to transfer ownership of the transactable credit, the computer system performs various operations. In particular, the computer system accesses the decentralized chain of custody in the distributed ledger. The computer system compares the geolocation of the physical asset, as indicated by the geolocation data stored in the decentralized chain of custody, to a geolocation provided in the request. The computer system verifies a transferring party's ownership of the transactable credit using the decentralized chain of custody. The computer system transfers the transactable credit to a receiving party. Finally, the computer system records the transfer of ownership in the decentralized chain of custody. In doing so, the computer system stores transfer data describing the transfer of ownership in a latest record of the distributed ledger. The latest record also stores a hash value that logically links the latest record to its previous record in the distributed ledger (that is, to the record immediately before the latest record in the distributed ledger). This associates the latest record, through the distributed ledger, with the geolocation data stored in the first record, for example, as described above. In this way, the latest record of the distributed ledger is associated with the geolocation of the physical asset in a transparent, verifiable, and immutable way in the decentralized chain of custody for the transactable credit.

According to a third aspect of techniques and tools described herein, a computer system that implements a DLTN determines a geolocation of a physical asset based at least in part on a message sent by a client computing device (*e*.*g*., a smartphone, feature phone, or other mobile computing device). The physical asset is fixed to the geolocation, which, for example, may have been identified (a) using a GPS receiver of the client computing device while at the geolocation of the physical asset or (b) by cellular tower(s) in communication with the client computing device while at the geolocation of the physical asset.

The computer system stores, across record(s) of the distributed ledger, geolocation data for the physical asset and asset data for the physical asset. In particular, the geolocation data is stored in a first record among the record(s), and the asset data is stored in the first record or a different record (before or after the first record). Each given record after the first record in the distributed ledger stores a hash value for the given record. The hash value for the given record logically links the given record to its previous record in the distributed ledger (that is, to the record immediately before the given record in the distributed ledger). This associates the given record, through the distributed ledger (that is, with hash values for respective records of the distributed ledger), with the geolocation data stored in the first record, for example, as described above. In this way, the given record(s) are associated with the geolocation of the physical asset in a transparent, verifiable, and immutable way.

The computer system authorizes a transaction involving the physical asset using the geolocation data and the asset data stored in the distributed ledger. The computer system modifies the distributed ledger to store transaction data representing the transaction in the distributed ledger. In particular, the transaction data is stored in a latest record of the distributed ledger. The latest record also stores a hash value that logically links the latest record to its previous record in the distributed ledger (that is, to the record immediately before the latest record in the distributed ledger). This associates the latest record, through the distributed ledger, with the geolocation data stored in the first record, for example, as described above. Thus, the geolocation data, the asset data, and the transaction data form a decentralized chain of custody, stored in the distributed ledger, related to the physical asset.

Upon receiving a request to authorize a second transaction involving the physical asset, the computer system retrieves the decentralized chain of custody from the distributed ledger. The computer system determines whether to authorize the second transaction based on the decentralized chain of custody (*e*.*g*., determining an ownership or a redemption history from the decentralized chain of custody).

The innovations described herein can be implemented as part of a method, as part of a computer system (physical or virtual) configured to perform the method, or as part of a tangible computer-readable media storing computer-executable instructions for causing one or more processors, when programmed thereby, to perform the method. The various innovations can be used in combination or separately. The innovations described herein include the innovations covered by the claims. This summary is provided to introduce a selection of concepts in a simplified form that are further described below in the detailed description. This summary is not intended to identify key features or essential features of the claimed subject matter, nor is it intended to be used to limit the scope of the claimed subject matter. The foregoing and other objects, features, and advantages of the invention will become more apparent from the following detailed description, which proceeds with reference to the accompanying figures and illustrates a number of examples. Examples may also be capable of other and different applications, and some details may be modified in various respects all without departing from the spirit and scope of the disclosed innovations.

### BRIEF DESCRIPTION OF THE DRAWINGS

FIG. 1 illustrates an example blockchain that can be used to implement a distributed-ledger-based chain of custody.
FIG. 2 illustrates an example architecture for managing a private blockchain.
FIG. 3 illustrates an example method of authorizing a transaction involving a transactable credit using a distributed-ledger-based chain of custody.
FIG. 4 illustrates interactions during authorization of a transaction using a decentralized, distributed-ledger-based chain of custody.
FIG. 5 illustrates an example system configured to implement a transaction platform using a distributed-ledger-based chain of custody.
FIG. 6 illustrates an example method of transferring ownership of a transactable credit in a credit transaction platform using a distributed-ledger-based chain of custody.
FIG. 7 illustrates an example method of authorizing a transaction using a distributed-ledger-based chain of custody.
FIG. 8 is a diagram of an example computing environment in which some described embodiments can be implemented.

### DETAILED DESCRIPTION

Using the systems, methods, and computer-readable media described herein, a decentralized chain of custody can be implemented using a distributed ledger. A transactable credit can be generated that represents a physical asset fixed to a geolocation. The geolocation of the physical asset, transactions involving the transactable credit, time/date the transactable credit was established, initial/subsequent/current ownership of the transactable credit, and other information can be stored directly in the distributed-ledger-based chain of custody.

Unlike a database, spreadsheet, or other centralized and editable attempt at a chain of custody, the distributed-ledger-based chain of custody examples described herein provide a complete and verified history of a transactable credit (*i*.*e*., provenance for the transactable credit). The distributed-ledger-based chain of custody can thus be used to definitively verify ownership or status of a transactable credit in association with the geolocation of a physical asset for the transactable credit, authorize and provide verification for transactions involving the transactable credit in association with the geolocation of the physical asset, and ensure that every transaction involving a particular credit and/or geolocation is recorded and made available for inspection. Geolocating the physical asset and including the geolocation in the decentralized chain of custody along with information related to establishment of the transactable credit ensures that the credit remains tied to the geolocation and prevents duplication/double counting of credits for a given physical asset/geolocation.

In one set of examples, the physical asset can be land and/or trees, crops, or other plants. A transactable carbon credit representing carbon being stored or sequestered by the land/trees can be generated by the landowner or farmer/grower. Various characteristics such as species, crop type, planting date, growth rate, soil conditions, moisture content, etc., along with the geolocation of the land/trees, can be recorded in a chain of custody stored in a distributed ledger. The carbon credit can be traded, sold, transferred, etc., and such transactions are recorded in the distributed-ledger-based chain of custody. Because the carbon credit is tied to a particular geolocation, a landowner (or other person) is prevented from establishing multiple credits representing the same aspects of the same land (*e*.*g*., temporal or physical aspects). The landowner also has proof that the credit was established for their land and proof of any transactions that have occurred related to the credit (such as a sale or transfer).

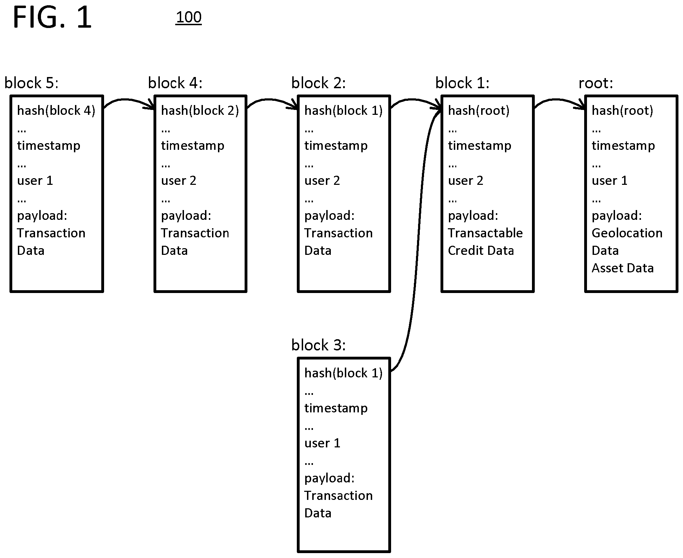

The described distributed-ledger-based chain of custody examples provide a technical solution, through the use of geolocation data and "cradle-to-grave" distributed ledger tracking, to overcome the technical problems of conventional computer-based tracking and chain of custody approaches. Specifically, databases and other data structures can be modified, and the integrity of the underlying data typically cannot always be verified. Further, existing approaches do not capture the complete provenance of what is being tracked in association with the geolocation of a physical asset. Examples are described below with reference to FIGS. 1-8.

### I. Example Blockchains

As used herein, the terms "distributed ledger" and "blockchain" are interchangeable. In general, a blockchain is a dynamically-growing list of records, called blocks, in a chain. A given block is logically linked to the previous block in the blockchain. For example, a hash value is computed by applying a cryptographic hash function to the data of the previous block, and the hash value is stored in the given block. The given block also includes other fields such as a timestamp and payload data. In the described examples, the payload data can include geolocation data, transaction data, and other data that forms a chain of custody in the blockchain. As a rule, once a given block is added to the blockchain, data in the given block cannot be later modified because any subsequent blocks depend on the data in the given block. (To retroactively alter data in the given block, the subsequent blocks in the blockchain must also be altered, requiring a level of consensus within the blockchain network that is impossible or impractical to achieve.) The integrity of the blockchain can be verified by re-computing hash values for the respective blocks in the blockchain and comparing those re-computed hash values to the previously-computed hash values that logically link the blocks.

In some cases, multiple blocks can be produced concurrently and added to the same previous block in the blockchain. This temporarily creates a fork in the blockchain. The nodes of the blockchain network follow a protocol to rank ("score") the different branches of the fork, such that one of the branches (with the highest score) is followed by all nodes. In this way, the size of non-favored branches of the blockchain is limited. Nodes supporting the blockchain share versions of the blockchain and retain the version with the highest score. Various incentives are implemented to reduce the likelihood of a version of the blockchain being superseded, the longer that version of the blockchain is used.

By storing the blockchain across nodes of the blockchain network, risks of data loss associated with storing data in a single, centralized location are mitigated. Depending on implementation, each node in a blockchain network can store a complete or partial copy of the blockchain.

In a public blockchain (also called a permissionless blockchain), blocks of the blockchain are accessible to the participants in the blockchain network, without permission. Any participant in the blockchain network can access blocks in the blockchain, verify blocks of the blockchain, add new blocks to the blockchain, and validate the new blocks of the blockchain. Access control is not used in a public blockchain. In contrast, in a private blockchain (also called a permissioned blockchain), a central authority controls access to the blockchain network. That is, the central authority controls which participants can access blocks in the blockchain, verify blocks of the blockchain, add new blocks to the blockchain, and validate the new blocks of the blockchain.

FIG. 1 shows an example blockchain 100, which is simplified for the sake of illustration. Blockchain 100 can be replicated between different nodes of a blockchain network. Each of the nodes can store a complete or partial copy of blockchain 100. The blockchain 100 includes multiple blocks, starting from a root block and dynamically growing as blocks are added to the blockchain. Each of the blocks includes a header and payload data.

The header for a block includes multiple fields. The header includes a hash value computed by applying a cryptographic hash function to the data of the previous block in the blockchain 100. In this way, a given block is logically linked to the previous block in the blockchain. For example, the hash value for block 1 is computed by applying the cryptographic hash function to the data of the root block, the hash value for block 2 is computed by applying the cryptographic hash function to the data of block 1, and so on. The hash value for the root block is also computed by applying the hash function to the data of the root block (*e*.*g*., the geolocation and physical asset data). The integrity of the blockchain 100 can be verified by re-computing hash values for the respective blocks in the blockchain 100 and comparing those re-computed hash values to the previously-computed hash values (in headers) that logically link the blocks. In this way, the payload data in the blockchain 100 can be verified.

The header for a block can also include a timestamp and user identifier ("ID") for the user associated with the block (*e*.*g*., the owner of the payload data). Other fields of the header depend on implementation and, for the sake of simplicity, are not shown. For example, the fields can include a key ID that identifies the encryption key used to encrypt the payload data in the block and a category ID that identifies the category of the payload data in the block. In general, the fields of the header depend on the rules defined for the DLTN.

Blockchain 100 is used as primary storage for data that forms a distributed-ledger-based chain of custody. Blockchain 100 can be shared - there is no central database that always stores data or central administrator who owns and controls the data. In some blocks of blockchain 100, the payload data is user data for a user (*e*.*g*., for one or more transactions, contact data, biographical data, identification documents), where the user data can include static data and/or dynamic data. In the root block shown in FIG. 1, geolocation and identifying information for a physical asset are included in the payload data. Information related to generation of a transactable credit representing the physical asset can also be stored in the payload data of the root block (or in other blocks, such as block 1 as is shown in FIG. 1). Subsequent blocks can store transaction information for the transactable credit (such as sales, transfers of ownership, redemption status, etc.), as shown in blocks 2-5 in FIG. 1.

In the example of FIG. 1, payload data in a given block is "owned" by the user specified by the user ID in the given block. Permission settings for the user, which can be stored in blockchain 100 or stored outside the blockchain, can be used to control access to the user data of the user. The payload data in the blockchain 100 can be encrypted by encryption keys that are user-specific (for the respective owners of the payload data) and context-specific (*e*.*g*., depending on access privileges). Thus, in some examples, blockchain 100 can include different encrypted versions of the same payload data, which can be made accessible to different sets of users.

Due to successive application of the cryptographic hash function to compute the hash values that logically link blocks in the blockchain 100, a block depends on the data (including hash values) of earlier blocks in blockchain 100. As a rule, once a block is added to blockchain 100, data in the block cannot be later modified. To retroactively alter data in the block, subsequent blocks in the blockchain must also be altered, requiring a level of consensus within the blockchain network that may be impossible or impractical to achieve.

In some cases, multiple blocks can be produced concurrently and added to the same previous block in blockchain 100. In FIG. 1, block 2 and block 3 were produced concurrently and added from block 1 in blockchain 100. This temporarily creates a fork in blockchain 100. A protocol is followed to rank ("score") the different branches of the fork, such that one of the branches (with the highest score) is followed by all nodes. In FIG. 1, block 2 has a higher score than block 3, so subsequent blocks are added from block 2. Nodes in the blockchain network share versions of blockchain 100 and retain the version with the highest score. Various incentives are implemented to reduce the likelihood of a version of blockchain 100 being superseded, the longer that version of the blockchain 100 is used.

In many of the examples described herein, the blockchain is a private, permissioned blockchain. In some examples, however, the blockchain can instead be a public blockchain.

For the sake of simplicity, FIG. 1 shows a blockchain 100 in which all blocks are logically linked (*e*.*g*., with hash values for the respective blocks) in a single chain. Alternatively, a set of separate chains of blocks can be used in place of a single blockchain, *e*.*g*., logically linking blocks of user data in one chain, logically linking blocks of permission settings in another chain. As used herein, the term "distributed ledger" includes records logically linked into one or more chains that are managed by a distributed ledger platform. Similarly, the term "blockchain" includes blocks logically linked into one or more chains that are managed by a blockchain platform.

### II. Example Architectures

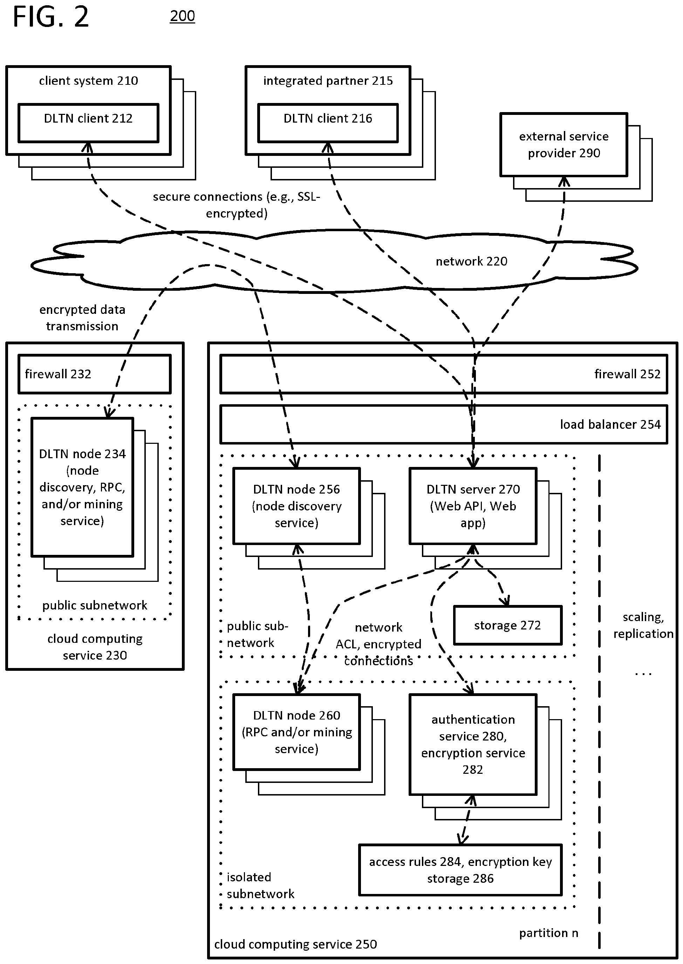

FIG. 2 shows an example architecture 200 for managing a private blockchain in a DLTN. In example architecture 200, various entities are configured to communicate over a network 220 such as the Internet.

One or more client systems 210 each include a DLTN client 212 for the DLTN. The user of DLTN client 212 can be an individual person, a small business, a large business, a bank, a non-profit organization, a government agency, or another entity. A client system 210 can be a personal computer, laptop computer, smartphone, or other type of computing device.

In FIG. 2, each of one or more integrated partner systems 215 also includes a DLTN client 216 for the DLTN. Compared to the user of a client system 210, the user of an integrated partner system 215 potentially has enhanced privileges, permissions, or rights in the DLTN. For purposes of the innovations described herein, however, DLTN client 216 for integrated partner system 215 is essentially the same as DLTN client 212 for client system 210. Integrated partner system 215 can be a personal computer, laptop computer, smartphone, or other type of computing device.

DLTN client 212, 216 is configured to interoperate with a DLTN server 270 for the DLTN over a secure connection (*e*.*g*., SSL-encrypted connection). In general, DLTN client 212, 216 provides a client-side user interface ("UI") to the DLTN. DLTN client 212, 216 can make other client-side decisions and manage client-side communication. DLTN client 212, 216 can be implemented as a stand-alone executable (*e*.*g*., separate application). DLTN client 212, 216 can also be implemented using client-side scripting logic or other control logic in a Web browser environment, executing at the client-side. Or, DLTN client 212, 216 can be implemented as a set of functions of a Web browser to control client-facing scripting logic executed by the DLTN server, where the scripting logic executes at the DLTN server but is controlled client-side user input for navigation (*e*.*g*., clicks, data entry). Thus, DLTN client 212, 216 can be implemented using conventional functions of a Web browser, which provide a "front end" to a Web application of the DLTN server. In some example implementations, DLTN client 212, 216 is implemented using conventional Web browser functions, which control a client-facing script using JavaScript Object Notation ("JSON") to interoperate with the DLTN. Acting in conjunction with DLTN server 270, DLTN client 212, 216 is configured to allow a user to perform various actions. For example, through DLTN client 212, 216, the user can: log in to the DLTN; manage a network of connections to other users of the DLTN; engage in transactions with other users in the DLTN; add, edit, or remove user data; edit permission settings for the user data of the user; request access to the user data of another user; grant or revoke access to the user data of the user in response to a request from another user; create a custom form to be shared with other users; provide data for a form shared by another user; or review, approve, reject or take some other action on a submitted form.

One or more external service providers 290 are configured to provide services to DLTN server 270. External service provider 290 is configured to interoperate with DLTN server 270 over a secure connection (*e*.*g*., SSL-encrypted connection).

For example, external service providers 290 can include one or more providers of communication services, which are configured to provide programmatic access to DLTN server 270 for functionality to make and receive phone calls, send and receive text messages via SMS or another set of protocols, or perform other communication functions. In some example implementations, external service providers 290 include Twilio, Clickatell, and Nexmo. In particular, a provider 290 of communication services can allow DLTN server 270 to communicate with a user having a feature phone or other client computing device via an alternative channel of communication (*e*.*g*., phone call and voice navigation menu; SMS messages) in order to receive, from the client computing device, geolocation data describing a geolocation of a physical asset and/or asset data describing the physical asset, for which a transactable credit will be generated. Or, as another example, a provider 290 of communication services can allow DLTN server 270 to communicate with a user via an alternative channel of communication (*e*.*g*., phone call and voice navigation menu; SMS messages) when rejecting or approving requests to grant access to user data of the user.

As another example, external service providers 290 can include one or more providers of email services, which are configured provide programmatic access to DLTN server 270 for functionality to send and receive emails. In some example implementations, external service providers 290 include SendGrid. In particular, a provider of email services can allow DLTN server 270 to communicate with a user via an alternative channel of communication (*e.g*., email) when sending requests to grant access to user data of the user.

In FIG. 2, cloud computing services 230, 250 host services that provide functionality for the DLTN. For example, cloud computing services 230, 250 are provided through Microsoft Azure, Google Cloud, or Amazon Web Services. Although FIG. 2 shows two different providers 230, 250 for cloud computing services, alternatively, a single provider or more providers could be used to host services that provide functionality for the DLTN. Or, privately owned computing resources or a mix of privately owned computing resources and cloud computing services could be used to provide server-side functionality for the DLTN.

Cloud computing service 230, 250 can be configured to organize services into separate partitions, groups, etc. In this way, cloud computing service 230, 250 can support scaling of the services and/or replication. A load balancer 254 can be configured to distribute traffic and workloads across partitions.

A firewall 232, 252 can be configured to monitor and control incoming network traffic and outgoing network traffic. Firewall 232, 252 can be configured to apply various security rules to establish a barrier between network 220 and resources of cloud computing service 230, 250. Cloud computing service 230, 250 can be configured to include one or more public subnetworks and one or more isolated (private) subnetworks. In general, a public subnetwork is accessible to the Internet. An isolated network is not accessible through the Internet, but instead is accessible through an access control list ("ACL") or other mechanisms managed by cloud computing service 230, 250.

In some example implementations, services hosted in cloud computing service 230, 250 are deployed in "containers" or executed in virtual machines. A container or virtual machine virtualizes access to resources, which are provided by cloud computing service 230, 250. In some example implementations, services are deployed in Docker containers, which can be distributed across different locations.

The DLTN includes various specialized nodes, which are configured to perform different services according to the rules of the DLTN. For redundancy, the nodes can be distributed across one or more clouds provided through cloud computing services 230, 250. For example, the DLTN can use Ethereum technology, which provides a blockchain-based distributed computing platform and operating system, potentially supporting smart contract functionality. Alternatively, the DLTN uses another technology (*e*.*g*., Eris:db, HydraChain, Hyperledger Fabric, Iroha, Sawtooth Lake, IBM Blockchain Platform, Multichain, Openchain, Cardano, Quorum, Stellar, Symbiont Assembly, BigChainDB, ChainCore, Corda, Credits, Domus Tower Blockchain, Elements Blockchain Platform,). As used herein, the terms "distributed ledger trust network" and "blockchain network" are interchangeable, and the term blockchain generally indicates any ledger of records (blocks) that are logically linked.

Nodes 234, 256, 260 of the DLTN provide various services. In general, a DLTN node can be configured to store (synchronize) data for the blockchain. Or, a DLTN node can be configured to validate transactions, before a new block is added to the blockchain. (In some example implementations, a block can be added to the blockchain without use of a cryptocurrency for payment. As such, the speed and security of transactions is not impacted by potential volatility of a cryptocurrency used in the DLTN. Alternatively, a cryptocurrency (*e*.*g*., Ether) can be used for payments within the DLTN. In such implementations, a DLTN node can be configured to mine for cryptocurrency used in the DLTN.) Or, a DLTN node can coordinate activity in the DLTN. In general, to add a block to the blockchain, a DLTN node approves (validates) the block and adds the block.

In FIG. 2, a DLTN node 256 hosted in a public subnetwork of the cloud computing service (250) provides a node discovery service. A node discovery service is used to locate nodes in the DLTN. In some example implementations, DLTN node 256 is an Ethereum bootnode, which provides a lightweight service to locate nodes according to a node discovery protocol. As another example, DLTN node 260 can be hosted in an isolated subnetwork of cloud computing service 250 provide an RPC service and/or mining service. In some example implementations, node 260 provides an Ethereum RPC service and/or Ether mining service. As another example, DLTN node 234 hosted in a public subnetwork of cloud computing service 230 provides a node discovery service, RPC service, and/or mining service. DLTN nodes 234, 256 in the public subnetworks communicate via encrypted data transmission over network 220. DLTN node 260 in the isolated subnetwork communicates with node 256 in the public subnetwork via a connection secured using network ACLs and encryption.

In some example implementations, DLTN nodes 234, 256, 260 are Ethereum nodes implemented using Geth. Alternatively, the nodes use another implementation of Ethereum or use another DLTN technology. In some example implementations, DLTN nodes 234, 256, 260 are deployed in Docker containers. Alternatively, DLTN nodes 234, 256, 260 are deployed using another virtualization technology.

Architecture 200 includes one or more DLTN servers 270. DLTN server 270 is configured to interoperate with one or more DLTN clients 212, 216 for the DLTN over a secure connection (*e*.*g*., SSL-encrypted connection). DLTN server 270 is also configured to interoperate with one or more external service providers 290 over secure connections (*e*.*g*., SSL-encrypted connections), and hence is configured to interoperate with client computing devices that are in communication with the external service providers 290. DLTN server 270 can be implemented as a stand-alone executable, as a Web application (also called Web-based application), or in some other way. In some example implementations, DLTN server 270 includes control logic executable to implement methods of an application programming interface ("API"), to provide Web application functionality, to make other server-side decisions, and to manage server-side communication. In these example implementations, the API is designed according to representational state transfer ("REST") principles. The API is designed to have predictable, resource-oriented uniform resource locators ("URLs") and to use HTTP response codes to indicate API errors. The API uses built-in HTTP features (such as HTTP verbs), which are typically understood by off-the-shelf HTTP clients. The API uses JSON for input and output. Web application components of DLTN server 270 can be separate from API components of DLTN server 270. For example, with respect to front-end components for interoperating with DLTN client 212, 216, DLTN server 270 can be implemented using a library (such as React, a JavaScript library) that provides functionality for building UIs, as well as a library (such as Redux, a JavaScript library) that provides functionality for managing application state. With respect to back-end components, DLTN server 270 can be implemented using a run-time environment (such as NodeJS) for server-side scripting and command line tools, as well as a Web application framework (such as Express) that provides functionality for building Web applications and APIs. Alternatively, DLTN server 270 can be implemented in some other way. In some example implementations, DLTN server 270 is deployed in a Docker container in the cloud computing environment. Alternatively, DLTN server 270 is deployed using another virtualization technology.

In some respects, the one or more DLTN servers 270 in architecture 200 act as a centralized authority by mediating access to the blockchain network and other platform functions (*e*.*g*., for authentication or encryption/decryption). For example, DLTN server 270 controls write access to the blockchain and limits read access to the blockchain using a permissioning mechanism. In other respects, however, DLTN server 270 does not act as a central authority. There can be multiple DLTN servers 270. Moreover, transactions between users of the DLTN do not require approval or mediation by a DLTN server 270, aside from mediation of access to the blockchain network or other platform functions.

A DLTN server 270 is configured to allow a user, through a DLTN client 212, 216 or device in communication with an external service provider 290, to perform various actions, as described above. DLTN client 212, 216 and DLTN server 270 can be internationalized/localized to different languages.

Architecture 200 also includes storage 272, which is configured to store photos, attachments, and other data accessible to DLTN server 270. Such data can be used in various operations for the DLTN. DLTN server 270 is configured to connect to storage 272 over a connection that is secured using network ACLs and encryption.

Authentication service 280 provides authentication services to DLTN server 270. The encryption service (282) provides encryption/decryption services to DLTN server 270. DLTN server 270 connects to authentication service 280 and encryption service 282 over connections that are secured using network ACLs and encryption. In some example implementations, authentication service 280 and encryption service 282 are implemented using Vault. Alternatively, authentication service 280 and encryption service 282 can be implemented in some other way. In some example implementations, authentication service 280 and encryption service 282 are deployed in a Docker container in the cloud computing environment. Alternatively, authentication service 280 and encryption service 282 are deployed using another virtualization technology.

Authentication service 280 and encryption service 282 are configured to manage and apply access rules 284 (such as ACL data, policy data) and encryption keys 286 in storage, which is accessible to authentication service 280 and encryption service 282 over a secure connection. Access rules 284 (*e*.*g*., ACL data, policy data) and encryption keys 286 are stored in encrypted form in a protected (isolated) subnetwork with no Internet access. In the DLTN, data is typically encrypted at rest and in transit. In general, data in the blockchain is encrypted with encryption keys that are user-specific and context-specific. In transit, data can be encrypted using a mechanism provided by the connection. In some example implementations, key storage is implemented using Consul. Alternatively, key storage can be implemented in some other way.

### III. Example Authorization and Verification Using Chain of Custody in a DLTN

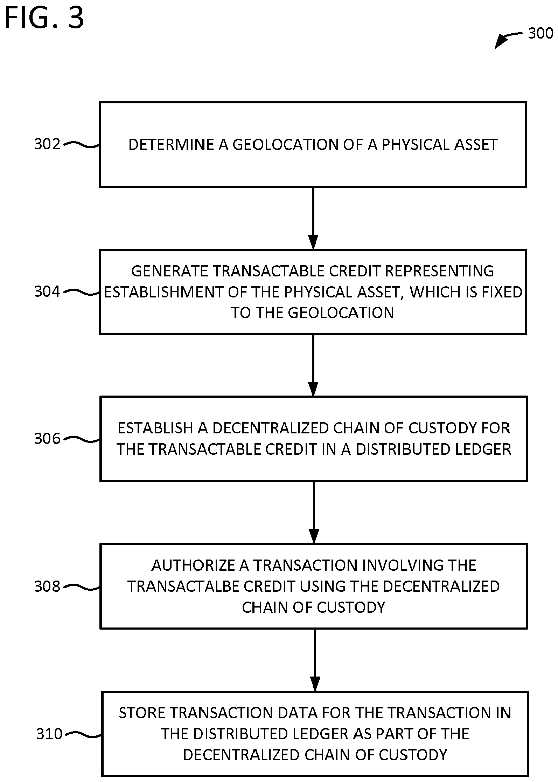

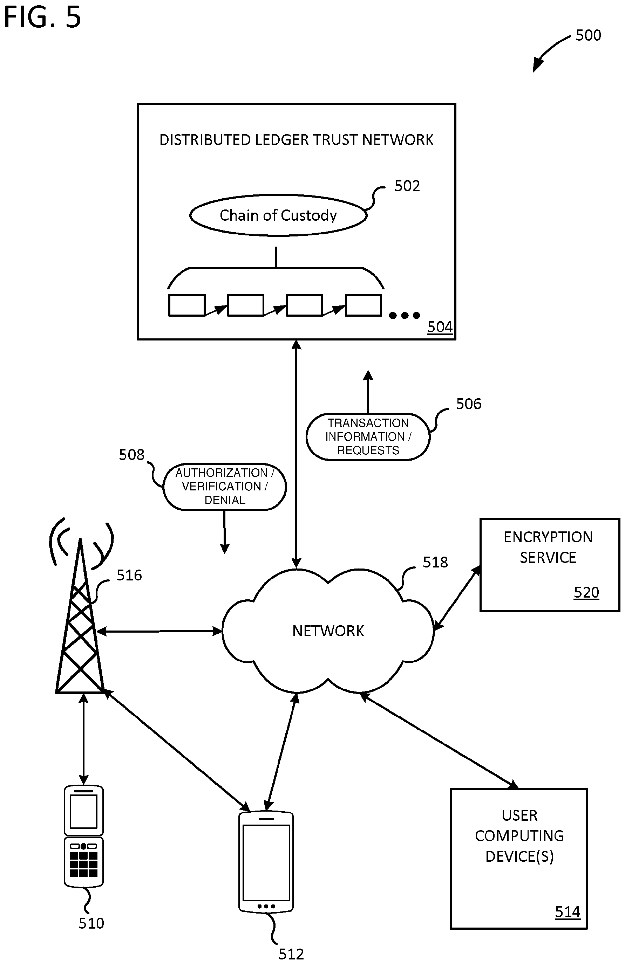

FIG. 3 illustrates a method 300 of authorizing a transaction involving a transactable credit using a distributed-ledger-based chain of custody. The method 300 is performed in a computer system that implements a distributed ledger trust network ("DLTN"), for example, as described with reference to FIG. 2 or FIG. 5.

In process block 302, a geolocation of a physical asset is determined. The geolocation can be determined based at least in part on a message sent by a client computing device. For example, the client computing device is a smartphone, feature phone, or other mobile computing device. Alternatively, the client computing device is another type of client system as described with reference to FIG. 2 or FIG. 5. The message can be an SMS text message, message in an application context, email message, or other type of message. In any case, the physical asset is fixed to the geolocation, which can be represented as latitude and longitude coordinates, as an address, as a "what3words" address, etc. In some cases (*e*.*g*., when the client computing device is a smartphone), the geolocation of the physical asset has been identified using a Global Positioning System ("GPS") receiver of the client computing device while at the geolocation of the physical asset. In other cases (*e*.*g*., when the client computing device is a feature phone that lacks a GPS receiver, or when the client computing device has a GPS receiver but is in an area without GPS coverage), the geolocation of the physical asset has been identified by one or more cellular towers in communication with the client computing device while at the geolocation of the physical asset. Alternatively, the geolocation of the physical asset has been identified in some other way. In general, the geolocation can be identified in any of several ways, including triangulating satellite signals using a GPS receiver, accessing survey or map information, or sending a text message to a DLTN server that manages a distributed ledger (*e*.*g*., a permissioned blockchain that is part of a distributed-ledger-based transaction platform), where the text message has an associated geolocation that can be identified using communication towers and provided to a DLTN server that manages the distributed ledger. In this way, for example, a transactable credit can be established by a landowner/farmer at the site of the land in question through text message communication (*e*.*g*., through a feature phone or other mobile device) with a DLTN server that manages the distributed ledger, and the geolocation can be determined from those text message(s).

In process block 304, a transactable credit is generated that represents establishment of the physical asset, which is fixed to the geolocation. In some examples, the physical asset can be land and/or trees, crops, or other plants growing on the land. The transactable credit can be, for example, a carbon credit/carbon offset, emission-related credit, or other credit tied to the land or plants. For example, a unit of forest land (*e*.*g*., one acre, 10 acres, 100 acres, etc.) can be the physical asset. An amount of expected carbon sequestration or carbon storage over a time period (*e*.*g*., lifetime, time before harvest, one year, one decade, etc.) can be determined, and the transactable credit can be a carbon credit for that amount of sequestered/stored carbon. "Establishment" of the physical asset in a land or plant context can refer to, for example, planting a crop/tree/other plant, a crop or forest growing to a desired level of maturity, or quantifying/characterizing/assessing the land/plants for carbon credit purposes.

The transactable credit can be registered in a credit transaction platform implemented, with the DLTN, using the distributed ledger. The platform allows users to generate/register credits and/or purchase or obtain credits generated by others. The platform can be used, for example, as a carbon offset or carbon credit trading platform.

A decentralized chain of custody for the transactable credit is established in a distributed ledger in process block 306. The decentralized chain of custody is stored directly in the distributed ledger and, in some example implementations, does not rely on any references to secondary databases or other data structures for "off-chain" storage. The decentralized chain of custody can include a variety of information, including information related to generation of the transactable credit, the geolocation of the physical asset, user information, information describing the physical asset, etc. For example, asset data describing the physical asset, geolocation data describing the geolocation of the physical asset, and transactable credit data describing the transactable credit are stored across one or more records of the distributed ledger for the transactable credit. In particular, the geolocation data can be stored in a first record (*e*.*g*., root record). The transactable credit data can be stored in the first record or a different record (before or after the first record). Each given record of the record(s) that is after the first record in the distributed ledger can store a hash value for the given record. The hash value for the given record logically links the given record to its previous record in the distributed ledger (that is, to the record immediately before the given record in the distributed ledger). This associates the given record, through the distributed ledger (that is, with hash values for respective records of the distributed ledger), with the geolocation data stored in the first record. For example, as described with reference to FIG. 1, the hash value for a second record is computed using the data stored in the first record, the hash value for a third record is computed using the data stored in the second record (including the hash value of the second record), the hash value for a fourth record is computed using the data stored in the third record (including the hash value of the third record), and so on, such that the hash value for each record after the first record depends at least in part on the geolocation data. In this way, each of the given record(s) of the distributed ledger is associated with the geolocation of the physical asset in a transparent, verifiable, and immutable way in the decentralized chain of custody for the transactable credit.

As transactions occur involving the transactable credit (*e*.*g*., redemptions, transfers of ownership, expiration, revocation, etc.), transaction information for the transactions is stored in the distributed ledger and becomes part of the decentralized chain of custody. In examples in which the transactable credit is registered in a credit transaction platform implemented using the distributed ledger, a decentralized chain of custody can be established for each credit registered with the platform.

In process block 308, a transaction involving the transactable credit is authorized using the decentralized chain of custody. In some example implementations, the decentralized chain of custody serves as a complete record of the transactable credit from creation to the current time, so the chain of custody can be used to confirm ownership status before transfer, ensure that the credit has not already been redeemed or transferred, verify that the credit is the only credit corresponding to a particular geolocation (and user, time period, or circumstances), etc. A transaction request such as a transfer of the transactable credit can be authorized once such information is verified. As a specific example, a geolocation provided in an authorization request for the transaction can be compared to the geolocation (as indicated by geolocation data) stored in the decentralized chain of custody, and it can be verified that the transactable credit is owned by one party to the transaction during authorization.

In process block 310, transaction data for the transaction (*e*.*g*., the transaction request, authorization of the request, what was verified in determining to authorize, etc.) is stored in the distributed ledger as part of the decentralized chain of custody. For example, the transaction data is stored in a latest record of the distributed ledger, where the latest record also stores a hash value that logically links the latest record to its previous record in the distributed ledger (that is, to the record immediately before the latest record in the distributed ledger). This associates the latest record, through the distributed ledger, with the geolocation data stored in the first record, as described above. Authorization of the transaction is then available for inspection in authorization of any future transactions. For example, if the transaction is a transfer of ownership, and the original owner of the credit in the transaction tries to transfer the credit a second time, the decentralized chain of custody will reveal that the credit has already been transferred and the original owner no longer owns the credit, and the subsequent transaction will be denied. Similarly, any future party interested in acquiring the transactable credit will be able to inspect the decentralized chain of custody and verify that the credit was procured through the proper channels and is the only credit representing the physical asset.

The records of the distributed ledger can store data as described with reference to FIG. 1. For example, each of the records includes a header and payload data. The header for a record includes a timestamp. For a record after the root record, the header can also include a hash value computed using the data of the previous record. (The root record can also include a hash value, which is computed using payload data of the root record.) The header can also include a user identifier, an encryption key identifier, a data category identifier, and/or other data. Depending on the record, the payload data for a record can include the geolocation data describing the geolocation of the physical asset, asset data describing the physical asset (*e*.*g*., a period or duration such as lifetime, time before harvest, one year, one decade, etc.; characteristics such as tree/plant species, carbon credit/offset value, planting/harvest dates, harvest yield, growing conditions, soil type, etc.), transactable credit data describing the transactable credit, transaction data describing a transaction for the transactable credit, and/or other data. In particular, the payload data for the first record (*e*.*g*., root record) includes the geolocation data and can also include asset data and/or transactable credit data. The payload data for a subsequent record can include transaction data.

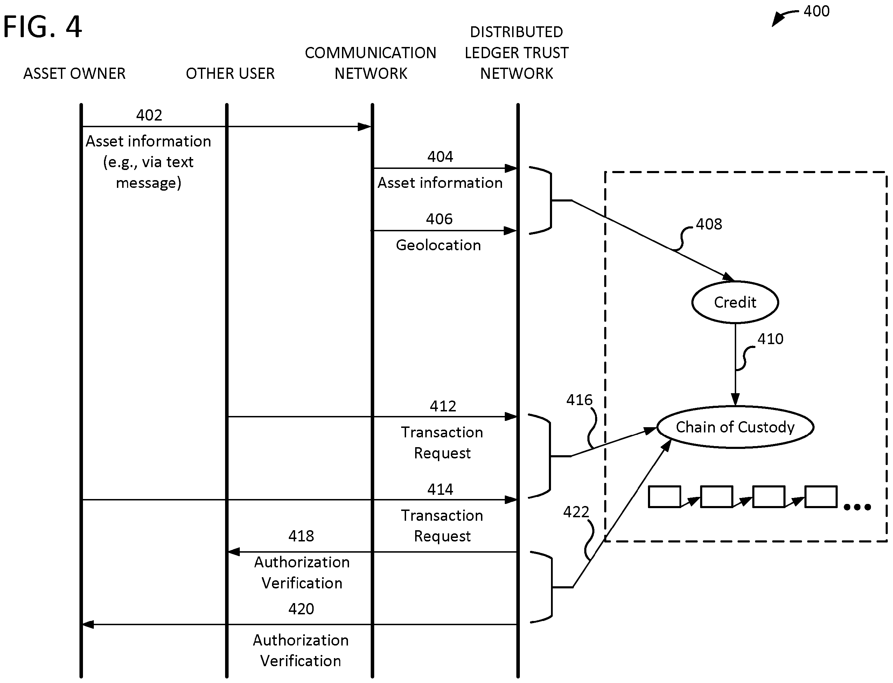

FIG. 4 illustrates interactions 400 performed during authorization of a transaction using a decentralized, distributed-ledger-based chain of custody. To generate a transactable credit, an asset owner or authorized representative provides physical asset information in interaction 402. The information can be sent, for example, via text message or through a browser. The asset information can include a description of the physical asset (tree/plant species, carbon credit/offset value, planting/harvest dates, harvest yield, growing conditions, soil type, etc.). The asset information is received at a communication network (*e*.*g*., cell tower and/or Internet or other computer network), and, in interaction 404, the asset information is communicated to a distributed ledger trust network. Geolocation data is communicated to the distributed ledger trust network in interaction 406. Geolocation data can be determined by a cell tower that has received a text message, through an IP address, through GPS coordinates determined using a GPS receiver, through a "what3words" address, or other approach. In some examples, the geolocation is provided as part of the asset information.

A transactable credit is then generated in interaction 408 in the distributed ledger trust network. A decentralized chain of custody for the transactable credit is generated in the distributed ledger in interaction 410. The chain of custody includes the asset information and geolocation associated with the physical asset represented by the credit. In interactions 412 and 414, transaction requests are received from the asset owner and another user. The transaction requests can be, for example, a request to transfer ownership of the credit from the owner to the other user. (In some examples, such a request is made by only one of the parties). The transaction requests are stored in the distributed ledger as part of the decentralized chain of custody in interaction 416.

In determining whether to authorize the transaction request, the chain of custody stored in the distributed ledger is accessed, and various information can be confirmed or verified by the distributed ledger trust network (*e*.*g*., that the transferring party is the current owner of the credit, that the stored geolocation matches a geolocation associated with the request, that multiple credits have not been generated for the same physical asset, that the credit has not already been transferred to a different other user, etc.).

After the transaction request has been authorized using the decentralized chain of custody, authorization verifications are transmitted back to the asset owner and other user in interactions 418 and 420. These verifications are stored in the distributed ledger as part of the chain of custody in interaction 422.

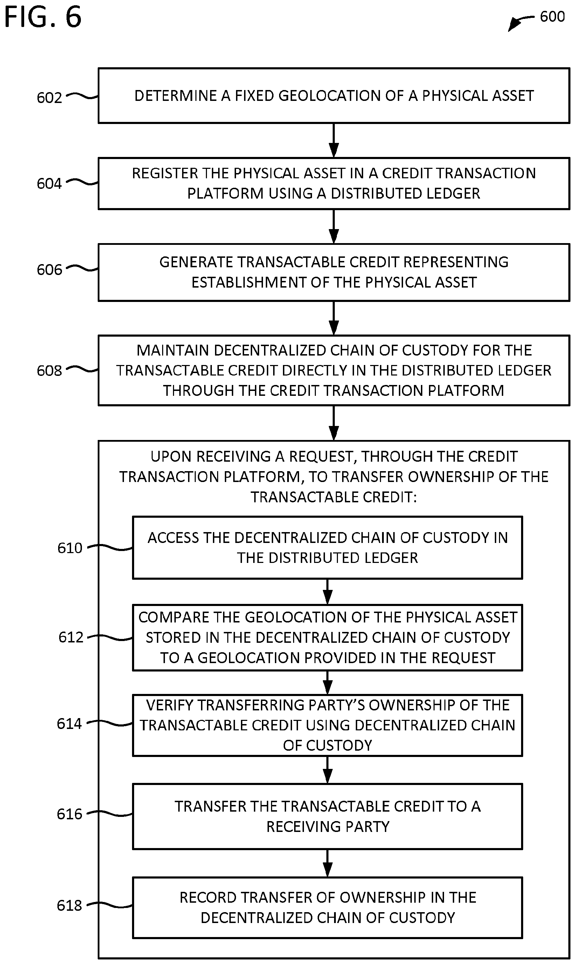

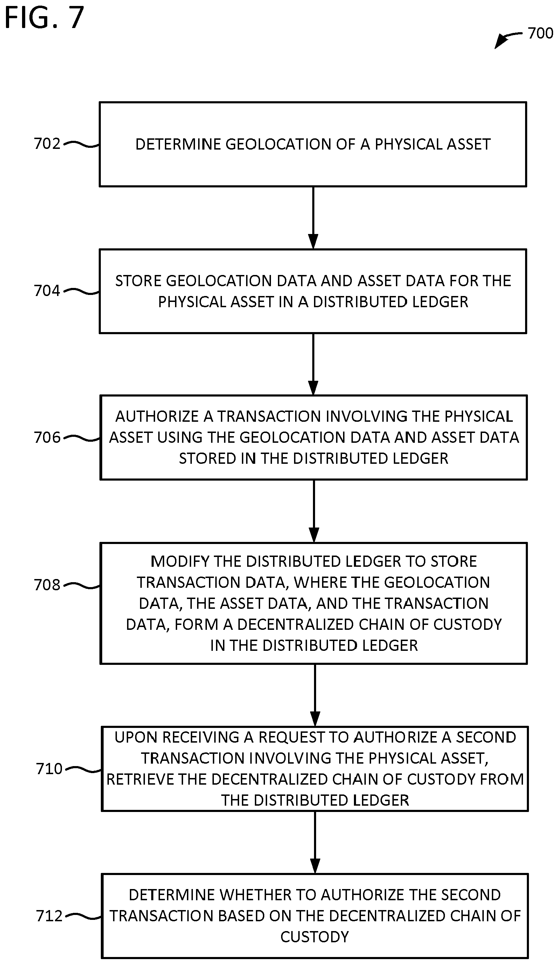

FIG. 5 illustrates an example system 500 configured to implement a transaction platform using a distributed-ledger-based chain of custody 502. System 500 can implement, for example, method 300 of FIG. 3, interactions 400 of FIG. 4, method 600 of FIG. 6, and/or method 700 of FIG. 7. Chain of custody 502 is stored on a distributed ledger trust network ("DLTN") 504. DLTN 504 can be implemented on one or more physical computers in a cloud computing environment, as described with reference to FIG. 2. For example, the DLTN 504 can be implemented using a DLTN server as well as DLTN nodes (for node discovery, RPC, mining, etc.), storage, an authentication service, and an encryption service (shown as a separate encryption service 520 in FIG. 5), as described with reference to FIG. 2. Alternatively, the DLTN 504 can be implemented in some other way.

Chain of custody 502 includes information describing a physical asset and a geolocation of the physical asset. Chain of custody 502 can also include transaction information 506 for transactions involving the physical asset or transactable credit. Transaction information 506 can include received transaction requests, whether the transaction was confirmed, the party submitting the request, the type of request (*e*.*g*., transfer of ownership, redemption, etc.), a timestamp, and other information. Chain of custody 502 can also include authorization or denial information 508. Authorization or denial information can include request information, a timestamp, a reason why a transaction request was denied or authorized, which information in chain of custody 502 was used in the denial or authorization, etc.

Users in the transaction platform can communicate with DLTN 504 through different types of devices, such as feature phone 510, smart phone 512, or other client computing device (*e*.*g*., tablet, laptop, desktop) 514. Feature phone 510 can communicate with DLTN 504 through cellular network 516 and computer network 518, facilitated by an external service provider of communication services in communication with the computer network 518, as described with reference to FIG. 2. The geolocation of a user communicating through feature phone 510 can be determined by cellular network 516 (*e*.*g*., by triangulation of signal strength values at cellular towers) based on a SIM card associated with feature phone 510, for example. This geolocation can be stored in chain of custody 502. Encryption service 520 can be used to encrypt information stored in chain of custody 502.

FIG. 6 illustrates a method 600 of transferring ownership of a transactable credit in a credit transaction platform using a distributed-ledger-based chain of custody. The method 600 is performed in a computer system that implements a DLTN, for example, as described with reference to FIG. 2 or FIG. 5.

A geolocation of the physical asset is determined in process block 602, for example, as described with reference to FIG. 3. The physical asset is fixed to the geolocation. In process block 604, a physical asset is registered in a credit transaction platform implemented using a distributed ledger. In process block 606, a transactable credit representing establishment of the physical asset is generated, for example, as described with reference to FIG. 3.

A decentralized chain of custody for the transactable credit is maintained directly in the distributed ledger through the credit transaction platform in process block 608. The decentralized chain of custody includes information describing the physical asset, the geolocation of the physical asset, and transactions involving the transactable credit. Future transactions will also be stored in the decentralized chain of custody. For example, asset data describing the physical asset, geolocation data describing the geolocation of the physical asset, and transaction data describing transactions involving the transactable credit are stored across multiple records of the distributed ledger for the transactable credit. In particular, the geolocation data can be stored in a first record (*e*.*g*., root record). Each given record of the record(s) that is after the first record in the distributed ledger can store a hash value for the given record. The hash value for the given record logically links the given record to its previous record in the distributed ledger (that is, to the record immediately before the given record in the distributed ledger). This associates the given record, through the distributed ledger (that is, with hash values for respective records of the distributed ledger), with the geolocation data stored in the first record, as described with reference to FIG. 3.

Process blocks 610, 612, 614, 616, and 618 are performed upon receiving a request, through the credit transaction platform, to transfer ownership of the transactable credit. In process block 610, the decentralized chain of custody is accessed in the distributed ledger. In process block 612, the geolocation of the physical asset (as indicated by the geolocation data) stored in the decentralized chain of custody is compared to a geolocation provided in the request. In process block 614, a transferring party's ownership of the transactable credit is verified using the decentralized chain of custody. In process block 616, the transactable credit is transferred to a receiving party (*e*.*g*., to another user who participates in the credit transaction platform). The transfer of ownership is recorded in the decentralized chain of custody in process block 616. For example, the transaction data is stored in a latest record of the distributed ledger, where the latest record also stores a hash value that logically links the latest record to its previous record in the distributed ledger (that is, to the record immediately before the latest record in the distributed ledger). This associates the latest record, through the distributed ledger, with the geolocation data stored in the first record, as described above.

FIG. 7 illustrates a method 700 of authorizing a transaction using a distributed-ledger-based chain of custody. The method 700 is performed in a computer system that implements a DLTN, for example, as described with reference to FIG. 2 or FIG. 5.

In process block 702, a geolocation of a physical asset is determined, for example, as described with reference to FIG. 3. In process block 704, geolocation data for the physical asset and asset data for the physical asset are stored across one or more records of a distributed ledger. In particular, the geolocation data can be stored in a first record (*e*.*g*., root record). The asset data can be stored in the first record or a different record (before or after the first record). Each given record that is after the first record in the distributed ledger can store a hash value for the given record. The hash value for the given record logically links the given record to its previous record in the distributed ledger (that is, to the record immediately before the given record in the distributed ledger). This associates the given record, through the distributed ledger (that is, with hash values for respective records of the distributed ledger), with the geolocation data stored in the first record, as described with reference to FIG. 3.

In process block 706, a transaction involving the physical asset is authorized using the geolocation data and asset data stored in the distributed ledger. The distributed ledger is modified to store transaction data representing the transaction in the distributed ledger in process block 708. For example, the transaction data is stored in a latest record of the distributed ledger, which also stores a hash value that logically links the latest record to its previous record in the distributed ledger (that is, to the record immediately before the latest record in the distributed ledger). This associates the latest record, through the distributed ledger, with the geolocation data stored in the first record. The geolocation data, asset data, and transaction data form a decentralized chain of custody, stored in the distributed ledger, related to the physical asset.

Upon receiving a request to authorize a second transaction involving the physical asset, the decentralized chain of custody is retrieved from the distributed ledger in process block 710. In process block 712, it is determined whether to authorize the second transaction based on the decentralized chain of custody. Determining whether to authorize the second transaction can include determining an ownership or a redemption history from the decentralized chain of custody.

In some examples, method 700 further comprises either (i) authorizing the second transaction upon determining that the decentralized chain of custody confirms ownership or a redemption status of either the physical asset or a transactable credit related to the physical asset or (ii) rejecting (not authorizing) the second transaction upon determining that the decentralized chain of custody does not confirm ownership or a redemption status of the physical asset or a transactable credit related to the physical asset.

The secure storage capabilities of the distributed ledger have been discussed herein, but the distributed ledger trust network can also be capable of executing code, which can be implemented as "smart contracts," which are programs that are stored on the distributed ledger and executed on the distributed ledger.

### IV. Alternatives

In preceding examples, a distributed ledger stores geolocation data for the geolocation of a physical asset as well as transactable credit data describing a transactable credit (such as a carbon credit or carbon offset). The transactable credit represents establishment of the physical asset. The geolocation data is stored in a first record (*e*.*g*., root record) of the distributed ledger. Later records of the distributed ledger can store transaction data describing transactions of the transactable credit. Throughout the transactions and after the last transaction for the transactable credit, the distributed ledger maintains the geolocation data for the geolocation of the physical asset. Thus, throughout the transactions and after the last transaction for the transactable credit, the distributed ledger can be used to verify the provenance of the transactable credit, using the geolocation that is immutably stored in the distributed ledger in association with the transactions for the transactable credit.

Similarly, records in the distributed ledger can store transaction data describing transactions of the physical asset itself. For example, such transactions could be sales or transfers of the physical asset. Or, such transactions could be transformations of the physical asset into a different form. Or, such transactions could be movements of the physical asset. Throughout the transactions and after the last transaction for the physical asset, the distributed ledger maintains the geolocation data for the geolocation of the physical asset. If the physical asset is moved, a new geolocation for the physical asset can be stored in a new record in the distributed ledger. Thus, throughout the later transactions and after the last transaction for the physical asset, the distributed ledger can be used to verify the provenance of the physical asset (or a transformed version of the physical asset), using geolocations for the physical asset that are immutably stored in the distributed ledger in association with the transactions for the physical asset.

For example, a transaction platform using a distributed-ledger-based chain of custody can perform a method of tracking transactions for a physical asset, even tracking the geolocation of the physical asset if the physical asset is moved. The method can be performed in a computer system that implements a DLTN, for example, as described with reference to FIG. 2 or FIG. 5.

An initial geolocation of the physical asset is determined, for example, as described with reference to FIG. 3. The physical asset is initially fixed to the initial geolocation. The physical asset is registered in a transaction platform implemented using a distributed ledger.

A decentralized chain of custody for the physical asset is maintained directly in the distributed ledger through the transaction platform. The decentralized chain of custody includes information describing the physical asset, the geolocation of the physical asset, and transactions involving the physical asset. Transaction data for future transactions will also be stored in the decentralized chain of custody. For example, asset data describing the physical asset, geolocation data describing the geolocation of the physical asset, and transaction data describing transactions involving the physical asset are stored across multiple records of the distributed ledger for the physical asset. In particular, the geolocation data for the initial geolocation can be stored in a first record (*e*.*g*., root record). Each given record of the record(s) that is after the first record in the distributed ledger can store a hash value for the given record. The hash value for the given record logically links the given record to its previous record in the distributed ledger (that is, to the record immediately before the given record in the distributed ledger). This associates the given record, through the distributed ledger, with the geolocation data stored in the first record, as described with reference to FIG. 3.

Upon receiving a request, through the transaction platform, to transfer ownership of the physical asset, transform the physical asset, move the physical asset, and/or perform some other transaction for the physical asset, various operations are performed. The decentralized chain of custody is accessed in the distributed ledger. The current geolocation of the physical asset (as indicated by the geolocation data) stored in the decentralized chain of custody can be compared to a geolocation provided in the request. For a transfer of ownership, a transferring party's ownership of the physical asset is verified using the decentralized chain of custody and, upon successful verification, ownership of the physical asset is transferred to a receiving party (*e*.*g*., to another user who participates in the transaction platform). If the physical asset moves to a new location, the geolocation data for the new geolocation can be determined. If the physical asset is transformed into a different form, data describing the transformation can be created.

Transaction data describing the transaction for the physical asset (*e.g*., transfer of ownership, movement, transformation) is recorded in the decentralized chain of custody. For example, the transaction data is stored in a latest record of the distributed ledger, where the latest record also stores a hash value that logically links the latest record to its previous record in the distributed ledger (that is, to the record immediately before the latest record in the distributed ledger). This associates the latest record, through the distributed ledger, with the geolocation data stored in the first record, as described above, and any later geolocation data stored in other records in the distributed ledger.

### V. Example Computing Systems

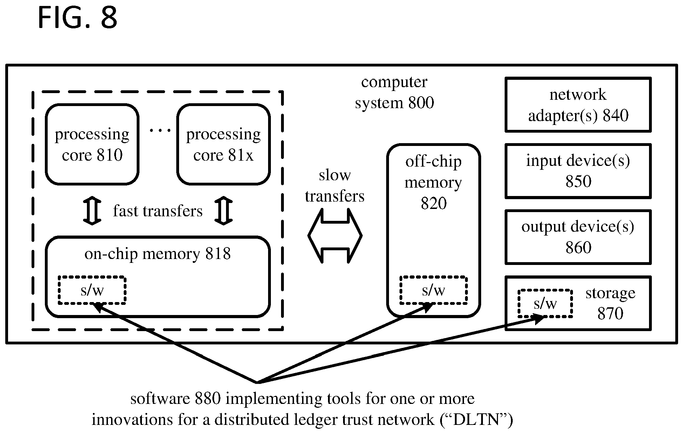

FIG. 8 illustrates a generalized example of a suitable computer system 800 in which several of the described innovations may be implemented. The innovations described herein relate to enhancements for a DLTN. Aside from its use in a DLTN, the computer system 800 is not intended to suggest any limitation as to scope of use or functionality, as the innovations may be implemented in diverse computer systems, including special-purpose computer systems adapted for operations in a DLTN.

With reference to FIG. 8, computer system 800 includes one or more processing cores 810... 81x of a central processing unit ("CPU") and local, on-chip memory 818. Processing core(s) 810... 81x execute computer-executable instructions. The number of processing core(s) 810... 81x depends on implementation and can be, for example, 4 or 8. Local memory 818 may be volatile memory (*e*.*g*., registers, cache, RAM), non-volatile memory (*e*.*g*., ROM, EEPROM, flash memory, etc.), or some combination of the two, accessible by the respective processing core(s) 810... 81x.

Local memory 818 can store software 880 implementing tools for innovations for a DLTN, for operations performed by the respective processing core(s) 810... 81x, in the form of computer-executable instructions. In FIG. 8, local memory 818 is on-chip memory such as one or more caches, for which access operations, transfer operations, etc. with the processing core(s) 810... 81x are fast.

Computer system 800 can include processing cores (not shown) and local memory (not shown) of a graphics processing unit ("GPU"). Alternatively, computer system 800 includes one or more processing cores (not shown) of a system-on-a-chip ("SoC"), application-specific integrated circuit ("ASIC") or other integrated circuit, along with associated memory (not shown). The processing core(s) can execute computer-executable instructions for one or more innovations for a DLTN.

More generally, the term "processor" may refer generically to any device that can process computer-executable instructions and may include a microprocessor, microcontroller, programmable logic device, digital signal processor, and/or other computational device. A processor may be a CPU or other general-purpose unit, however, it is also known to provide a specific-purpose processor using, for example, an ASIC or a field-programmable gate array ("FPGA").

The term "control logic" may refer to a controller or, more generally, one or more processors, operable to process computer-executable instructions, determine outcomes, and generate outputs. Depending on implementation, control logic can be implemented by software executable on a CPU, by software controlling special-purpose hardware (*e*.*g*., a GPU or other graphics hardware), or by special-purpose hardware (*e*.*g*., in an ASIC).

Computer system 800 includes shared memory 820, which may be volatile memory (*e*.*g*., RAM), non-volatile memory (*e*.*g*., ROM, EEPROM, flash memory, etc.), or some combination of the two, accessible by the processing core(s). Memory 820 stores software 880 implementing tools for one or more innovations for a DLTN, for operations performed, in the form of computer-executable instructions. In FIG. 8, shared memory 820 is off-chip memory, for which access operations, transfer operations, etc. with the processing cores are slower.

Computer system 800 includes one or more network adapters 840. As used herein, the term network adapter indicates any network interface card ("NIC"), network interface, network interface controller, or network interface device. Network adapter(s) 840 enable communication over a network to another computing entity (*e*.*g*., server, other computer system). The network can be a wide area network, local area network, storage area network or other network. Network adapter(s) 840 can support wired connections and/or wireless connections, for a wide area network, local area network, storage area network or other network. Network adapter(s) 840 convey data (such as computer-executable instructions, audio or video input or output, or other data) in a modulated data signal over network connection(s). A modulated data signal is a signal that has one or more of its characteristics set or changed in such a manner as to encode information in the signal. By way of example, and not limitation, the network connections can use an electrical, optical, RF, or other carrier.

Computer system 800 also includes one or more input device(s) 850. Input device(s) 850 may be a touch input device such as a keyboard, mouse, pen, or trackball, a scanning device, or another device that provides input to computer system 800. Computer system 800 can also include a video input, an audio input, a motion sensor/tracker input, and/or a game controller input.

Computer system 800 includes one or more output devices 860. Output device(s) 860 may be a printer, CD-writer, video output, audio output, or another device that provides output from computer system 800.

Storage 870 may be removable or non-removable, and includes magnetic media (such as magnetic disks, magnetic tapes or cassettes), optical disk media and/or any other media which can be used to store information and which can be accessed within computer system 800. Storage 870 stores instructions for software 880 implementing one or more innovations for a DLTN.

An interconnection mechanism (not shown) such as a bus, controller, or network interconnects the components of computer system 800. Typically, operating system software (not shown) provides an operating environment for other software executing in computer system 800 and coordinates activities of the components of computer system 800.

Computer system 800 of FIG. 8 is a physical computer system. A virtual machine can include components organized as shown in FIG. 8.

The term "application" or "program" may refer to software such as any user-mode instructions to provide functionality. The software of the application (or program) can further include instructions for an operating system and/or device drivers. The software can be stored in associated memory. The software may be, for example, firmware. While it is contemplated that an appropriately programmed general-purpose computer or computing device may be used to execute such software, it is also contemplated that hard-wired circuitry or custom hardware (*e*.*g*., an ASIC) may be used in place of, or in combination with, software instructions. Thus, examples are not limited to any specific combination of hardware and software.

The term "computer-readable medium" refers to any medium that participates in providing data (e.g., instructions) that may be read by a processor and accessed within a computing environment. A computer-readable medium may take many forms, including but not limited to non-volatile media and volatile media. Non-volatile media include, for example, optical or magnetic disks and other persistent memory. Volatile media include dynamic random access memory ("DRAM"). Common forms of computer-readable media include, for example, a solid state drive, a flash drive, a hard disk, any other magnetic medium, a CD-ROM, Digital Versatile Disc ("DVD"), any other optical medium, RAM, programmable read-only memory ("PROM"), erasable programmable read-only memory ("EPROM"), a USB memory stick, any other memory chip or cartridge, or any other medium from which a computer can read. The term "computer-readable memory" specifically excludes transitory propagating signals, carrier waves, and wave forms or other intangible or transitory media that may nevertheless be readable by a computer. The term "carrier wave" may refer to an electromagnetic wave modulated in amplitude or frequency to convey a signal.

The innovations can be described in the general context of computer-executable instructions being executed in a computer system on a target real or virtual processor. The computer-executable instructions can include instructions executable on processing cores of a general-purpose processor to provide functionality described herein, instructions executable to control a GPU or special-purpose hardware to provide functionality described herein, instructions executable on processing cores of a GPU to provide functionality described herein, and/or instructions executable on processing cores of a special-purpose processor to provide functionality described herein. In some implementations, computer-executable instructions can be organized in program modules. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computer system.

Numerous examples are described in this disclosure and are presented for illustrative purposes only. The described examples are not, and are not intended to be, limiting in any sense. The presently disclosed innovations are widely applicable to numerous contexts, as is readily apparent from the disclosure. One of ordinary skill in the art will recognize that the disclosed innovations may be practiced with various modifications and alterations, such as structural, logical, software, and electrical modifications. Although particular features of the disclosed innovations may be described with reference to one or more particular examples, it should be understood that such features are not limited to usage in the one or more particular examples with reference to which they are described, unless expressly specified otherwise. The present disclosure is neither a literal description of all examples nor a listing of features of the invention that must be present in all examples.

When an ordinal number (such as "first," "second," "third" and so on) is used as an adjective before a term, that ordinal number is used (unless expressly specified otherwise) merely to indicate a particular feature, such as to distinguish that particular feature from another feature that is described by the same term or by a similar term. The mere usage of the ordinal numbers "first," "second," "third," and so on does not indicate any physical order or location, any ordering in time, or any ranking in importance, quality, or otherwise. In addition, the mere usage of ordinal numbers does not define a numerical limit to the features identified with the ordinal numbers.

When introducing elements, the articles "a," "an," "the," and "said" are intended to mean that there are one or more of the elements. The terms "comprising," including," and "having" are intended to be inclusive and mean that there may be additional elements other than the listed elements.

When a single device, component, module, or structure is described, multiple devices, components, modules, or structures (whether or not they cooperate) may instead be used in place of the single device, component, module, or structure. Functionality that is described as being possessed by a single device may instead be possessed by multiple devices, whether or not they cooperate. Similarly, where multiple devices, components, modules, or structures are described herein, whether or not they cooperate, a single device, component, module, or structure may instead be used in place of the multiple devices, components, modules, or structures. Functionality that is described as being possessed by multiple devices may instead be possessed by a single device. In general, a computer system or device can be local or distributed and can include any combination of special-purpose hardware and/or hardware with software implementing the functionality described herein.

Further, the techniques and tools described herein are not limited to the specific examples described herein. Rather, the respective techniques and tools may be utilized independently and separately from other techniques and tools described herein.

Device, components, modules, or structures that are in communication with each other need not be in continuous communication with each other, unless expressly specified otherwise. On the contrary, such devices, components, modules, or structures need only transmit to each other as necessary or desirable and may actually refrain from exchanging data most of the time. For example, a device in communication with another device via the Internet might not transmit data to the other device for weeks at a time. In addition, devices, components, modules, or structures that are in communication with each other may communicate directly or indirectly through one or more intermediaries.

As used herein, the term "send" denotes any way of conveying information from one device, component, module, or structure to another device, component, module, or structure. The term "receive" denotes any way of getting information at one device, component, module, or structure from another device, component, module, or structure. The devices, components, modules, or structures can be part of the same computer system or different computer systems. Information can be passed by value (*e*.*g*., as a parameter of a message or function call) or passed by reference (*e*.*g*., in a buffer). Depending on context, information can be communicated directly or be conveyed through one or more intermediate devices, components, modules, or structures. As used herein, the term "connected" denotes an operable communication link between devices, components, modules, or structures, which can be part of the same computer system or different computer systems. The operable communication link can be a wired or wireless network connection, which can be direct or pass through one or more intermediaries (*e*.*g*., of a network).

A description of an example with several features does not imply that all or even any of such features are required. On the contrary, a variety of optional features are described to illustrate the wide variety of possible examples of the innovations described herein. Unless otherwise specified explicitly, no feature is essential or required.

Further, although process steps and stages may be described in a sequential order, such processes may be configured to work in different orders. Description of a specific sequence or order does not necessarily indicate a requirement that the steps/stages be performed in that order. Steps or stages may be performed in any order practical. Further, some steps or stages may be performed simultaneously despite being described or implied as occurring non-simultaneously. Description of a process as including multiple steps or stages does not imply that all, or even any, of the steps or stages are essential or required. Various other examples may omit some or all of the described steps or stages. Unless otherwise specified explicitly, no step or stage is essential or required. Similarly, although a product may be described as including multiple aspects, qualities, or characteristics, that does not mean that all of them are essential or required. Various other examples may omit some or all of the aspects, qualities, or characteristics.

An enumerated list of items does not imply that any or all of the items are mutually exclusive, unless expressly specified otherwise. Likewise, an enumerated list of items does not imply that any or all of the items are comprehensive of any category, unless expressly specified otherwise.

For the sake of presentation, the detailed description uses terms like "determine" and "select" to describe computer operations in a computer system. These terms denote operations performed by one or more processors or other components in the computer system and should not be confused with acts performed by a human being. The actual computer operations corresponding to these terms vary depending on implementation.

The foregoing description discloses only examples. Modifications which fall within the scope of the invention will be readily apparent to those of ordinary skill in the art. In view of the many possible examples to which the principles of the disclosed invention may be applied, it should be recognized that the illustrated examples are only preferred examples of the invention and should not be taken as limiting the scope of the invention. Rather, the scope of the invention is defined by the following claims. We therefore claim as our invention all that comes within the scope and spirit of these claims.

**The following is a list of further preferred embodiments of the invention:**
Embodiment 1: In a computer system that implements a distributed ledger trust network ("DLTN"), a method comprising:
   determining a geolocation of a physical asset based at least in part on a message sent by a client computing device, the physical asset being fixed to the geolocation, the geolocation of the physical asset having been identified (a) using a global positioning system ("GPS") receiver of the client computing device while at the geolocation of the physical asset or (b) by one or more cellular towers in communication with the client computing device while at the geolocation of the physical asset;
   generating a transactable credit representing establishment of the physical asset;
   establishing a decentralized chain of custody for the transactable credit in a distributed ledger, including storing, across one or more records of the distributed ledger for the transactable credit, asset data describing the physical asset, geolocation data describing the geolocation of the physical asset, and transactable credit data describing the transactable credit, wherein the geolocation data is stored in a first record among the one or more records, and wherein each given record of the one or more records that is after the first record in the distributed ledger stores a hash value for the given record that logically links the given record to its previous record in the distributed ledger, thereby associating the given record, through the distributed ledger, with the geolocation data stored in the first record;
   authorizing a transaction involving the transactable credit using the decentralized chain of custody; and
   storing transaction data for the transaction in the distributed ledger as part of the decentralized chain of custody, the transaction data being stored in a latest record of the distributed ledger, the latest record also storing a hash value that logically links the latest record to its previous record in the distributed ledger, thereby associating the latest record, through the distributed ledger, with the geolocation data stored in the first record.
Embodiment 2: The method of embodiment 1, wherein authorizing the transaction comprises:
   accessing the decentralized chain of custody in the distributed ledger;
   comparing the geolocation of the physical asset as indicated by the geolocation data stored in the decentralized chain of custody to a geolocation provided in an authorization request for the transaction; and
   verifying that the transactable credit is owned by one party to the transaction.
Embodiment 3: The method of embodiment 1, wherein authorizing the transaction comprises verifying a redemption status or use status of the transactable credit.
Embodiment 4: The method of embodiment 1, wherein the transactable credit is a carbon credit or carbon offset, and wherein the physical asset is a parcel of land or one or more plants on the parcel of land.
Embodiment 5: The method of embodiment 1, further comprising registering the transactable credit in a credit transaction platform implemented, with the DLTN, using the distributed ledger.
Embodiment 6: The method of embodiment 5, further comprising, prior to generating the transactable credit, verifying that another transactable credit for the physical asset is not tracked in the credit transaction platform.
Embodiment 7: The method of embodiment 5, further comprising, upon receiving a request to generate a second transactable credit for the physical asset in the credit transaction platform, denying the request to generate the second transactable credit.
Embodiment 8: The method of embodiment 1, wherein the client computing device is a smartphone, feature phone, or other mobile computing device, and wherein the distributed ledger is a permissioned blockchain.
Embodiment 9: The method of embodiment 1, wherein the decentralized chain of custody for the transactable credit is stored directly in the distributed ledger, wherein the first record is a root record, wherein the transactable credit data is stored in the first record or a different record of the one or more records, and wherein, for the latest record and each given record of the one or more records after the first record, the hash value depends at least in part on the geolocation data.
Embodiment 10: The method of embodiment 1, wherein the latest record and each of the one or more records includes:
   a header, wherein the header includes a timestamp, the hash value if present, and one or more of a user identifier, encryption key identifier, and data category identifier; and
   payload data, wherein the payload data for the first record includes the geolocation data.
Embodiment 11: One or more non-transitory computer-readable media having stored thereon computer-executable instructions to cause a computer system that implements a distributed ledger trust network ("DLTN"), when programmed thereby, to perform operations comprising:
   determining a geolocation of a physical asset based at least in part on a message sent by a client computing device, the physical asset being fixed to the geolocation, the geolocation of the physical asset having been identified (a) using a global positioning system ("GPS") receiver of the client computing device while at the geolocation of the physical asset or (b) by one or more cellular towers in communication with the client computing device while at the geolocation of the physical asset;
   registering the physical asset in a credit transaction platform implemented using a distributed ledger;
   generating a transactable credit representing establishment of the physical asset;
   maintaining a decentralized chain of custody for the transactable credit directly in the distributed ledger through the credit transaction platform, including storing, across multiple records of the distributed ledger for the transactable credit, asset data describing the physical asset, geolocation data describing the geolocation of the physical asset, and transaction data describing transactions involving the transactable credit, wherein the geolocation data is stored in a first record among the multiple records, and wherein each given record of the multiple records that is after the first record in the distributed ledger stores a hash value for the given record that logically links the given record to its previous record in the distributed ledger, thereby associating the given record, through the distributed ledger, with the geolocation data stored in the first record; and
   upon receiving a request, through the credit transaction platform, to transfer ownership of the transactable credit:
      accessing the decentralized chain of custody in the distributed ledger;
   comparing the geolocation of the physical asset as indicated by the geolocation data stored in the decentralized chain of custody to a geolocation provided in the request;
   verifying a transferring party's ownership of the transactable credit using the decentralized chain of custody;
      transferring the transactable credit to a receiving party; and
   recording the transfer of ownership in the decentralized chain of custody, including storing transfer data describing the transfer of ownership in a latest record of the distributed ledger, the latest record also storing a hash value that logically links the latest record to its previous record in the distributed ledger, thereby associating the latest record, through the distributed ledger, with the geolocation data stored in the first record.
Embodiment 12: The computer-readable media of embodiment 11, wherein the transactable credit is a carbon credit or carbon offset reflecting carbon sequestration by the physical asset, and wherein the physical asset is a parcel of land or one or more plants on the parcel of land.
Embodiment 13: The computer-readable media of embodiment 11, wherein the operations further comprise, prior to generating the transactable credit, verifying that another transactable credit for the physical asset is not tracked in the credit transaction platform.
Embodiment 14: A computer system that implements a distributed ledger trust network ("DLTN"), the computer system comprising one or more processors and one or more computer-readable storage media having stored therein computer-executable instructions for causing the one or more processors, when programmed thereby, to perform operations comprising:
   determining a geolocation of a physical asset based at least in part on a message sent by a client computing device, the physical asset being fixed to the geolocation, the geolocation of the physical asset having been identified (a) using a global positioning system ("GPS") receiver of the client computing device while at the geolocation of the physical asset or (b) by one or more cellular towers in communication with the client computing device while at the geolocation of the physical asset;
   storing, across one or more records of the distributed ledger, geolocation data for the physical asset and asset data for the physical asset, wherein the geolocation data is stored in a first record among the one or more records, wherein the asset data is stored in the first record or a different record among the one or more records, and wherein each given record of the one or more records that is after the first record in the distributed ledger stores a hash value for the given record that logically links the given record to its previous record in the distributed ledger, thereby associating the given record, through the distributed ledger, with the geolocation data stored in the first record;
   authorizing a transaction involving the physical asset using the geolocation data and the asset data stored in the distributed ledger;
   modifying the distributed ledger to store transaction data representing the transaction in the distributed ledger, the transaction data being stored in a latest record of the distributed ledger, the latest record also storing a hash value that logically links the latest record to its previous record in the distributed ledger, thereby associating the latest record, through the distributed ledger, with the geolocation data stored in the first record, wherein the geolocation data, the asset data, and the transaction data form a decentralized chain of custody, stored in the distributed ledger, related to the physical asset;
   upon receiving a request to authorize a second transaction involving the physical asset, retrieving the decentralized chain of custody from the distributed ledger; and
   determining whether to authorize the second transaction based on the decentralized chain of custody.
Embodiment 15: The computer system of embodiment 14, wherein the decentralized chain of custody indicates provenance of the physical asset or provenance of a transactable credit related to the physical asset.
Embodiment 16: The computer system of embodiment 14, wherein the transaction is an establishment of the physical asset as a carbon credit or carbon offset, wherein the physical asset is a parcel of land or one or more plants on the parcel of land.
Embodiment 17: The computer system of embodiment 14, wherein the determining whether to authorize the second transaction comprises determining an ownership or a redemption history from the decentralized chain of custody.
Embodiment 18: The computer system of embodiment 14, wherein the operations further comprise authorizing the second transaction upon determining that the decentralized chain of custody confirms ownership or a redemption status of either the physical asset or a transactable credit related to the physical asset.
Embodiment 19: The computer system of embodiment 14, wherein the operations further comprise rejecting the second transaction upon determining that the decentralized chain of custody does not confirm ownership or a redemption status of the physical asset or a transactable credit related to the physical asset.
Embodiment 20: The computer system of embodiment 14, wherein the client computing device is a smartphone, feature phone, or other mobile computing device, and wherein the distributed ledger is a permissioned blockchain.

## Claims

1. In a computer system that implements a distributed ledger trust network ("DLTN"), a method comprising:
determining a geolocation of a physical asset based at least in part on a message sent by a client computing device, the physical asset being fixed to the geolocation, the geolocation of the physical asset having been identified (a) using a global positioning system ("GPS") receiver of the client computing device while at the geolocation of the physical asset or (b) by one or more cellular towers in communication with the client computing device while at the geolocation of the physical asset;
generating a transactable credit representing establishment of the physical asset;
establishing a decentralized chain of custody for the transactable credit in a distributed ledger, including storing, across one or more records of the distributed ledger for the transactable credit, asset data describing the physical asset, geolocation data describing the geolocation of the physical asset, and transactable credit data describing the transactable credit, wherein the geolocation data is stored in a first record among the one or more records, and wherein each given record of the one or more records that is after the first record in the distributed ledger stores a hash value for the given record that logically links the given record to its previous record in the distributed ledger, thereby associating the given record, through the distributed ledger, with the geolocation data stored in the first record;
authorizing a transaction involving the transactable credit using the decentralized chain of custody; and
storing transaction data for the transaction in the distributed ledger as part of the decentralized chain of custody, the transaction data being stored in a latest record of the distributed ledger, the latest record also storing a hash value that logically links the latest record to its previous record in the distributed ledger, thereby associating the latest record, through the distributed ledger, with the geolocation data stored in the first record.

2. The method of claim 1, wherein authorizing the transaction comprises:
accessing the decentralized chain of custody in the distributed ledger;
comparing the geolocation of the physical asset as indicated by the geolocation data stored in the decentralized chain of custody to a geolocation provided in an authorization request for the transaction; and
verifying that the transactable credit is owned by one party to the transaction.

3. The method of claim 1 or 2, wherein authorizing the transaction comprises verifying a redemption status or use status of the transactable credit.

4. The method of one of claims 1 to 3, wherein the transactable credit is a carbon credit or carbon offset, and wherein the physical asset is a parcel of land or one or more plants on the parcel of land.

5. The method of one of claims 1 to 4, further comprising registering the transactable credit in a credit transaction platform implemented, with the DLTN, using the distributed ledger.

6. The method of claim 5, further comprising, prior to generating the transactable credit, verifying that another transactable credit for the physical asset is not tracked in the credit transaction platform.

7. The method of claim 5, further comprising, upon receiving a request to generate a second transactable credit for the physical asset in the credit transaction platform, denying the request to generate the second transactable credit.

8. The method of one of claims 1 to 7, wherein the client computing device is a smartphone, feature phone, or other mobile computing device, and wherein the distributed ledger is a permissioned blockchain.

9. The method of claim 1, wherein the decentralized chain of custody for the transactable credit is stored directly in the distributed ledger, wherein the first record is a root record, wherein the transactable credit data is stored in the first record or a different record of the one or more records, and wherein, for the latest record and each given record of the one or more records after the first record, the hash value depends at least in part on the geolocation data; or
wherein the latest record and each of the one or more records includes:
a header, wherein the header includes a timestamp, the hash value if present, and one or more of a user identifier, encryption key identifier, and data category identifier; and
payload data, wherein the payload data for the first record includes the geolocation data.

10. One or more non-transitory computer-readable media having stored thereon computer-executable instructions to cause a computer system that implements a distributed ledger trust network ("DLTN"), when programmed thereby, to perform operations comprising:
determining a geolocation of a physical asset based at least in part on a message sent by a client computing device, the physical asset being fixed to the geolocation, the geolocation of the physical asset having been identified (a) using a global positioning system ("GPS") receiver of the client computing device while at the geolocation of the physical asset or (b) by one or more cellular towers in communication with the client computing device while at the geolocation of the physical asset;
registering the physical asset in a credit transaction platform implemented using a distributed ledger;
generating a transactable credit representing establishment of the physical asset;
maintaining a decentralized chain of custody for the transactable credit directly in the distributed ledger through the credit transaction platform, including storing, across multiple records of the distributed ledger for the transactable credit, asset data describing the physical asset, geolocation data describing the geolocation of the physical asset, and transaction data describing transactions involving the transactable credit, wherein the geolocation data is stored in a first record among the multiple records, and wherein each given record of the multiple records that is after the first record in the distributed ledger stores a hash value for the given record that logically links the given record to its previous record in the distributed ledger, thereby associating the given record, through the distributed ledger, with the geolocation data stored in the first record; and
upon receiving a request, through the credit transaction platform, to transfer ownership of the transactable credit:
accessing the decentralized chain of custody in the distributed ledger;
comparing the geolocation of the physical asset as indicated by the geolocation data stored in the decentralized chain of custody to a geolocation provided in the request;
verifying a transferring party's ownership of the transactable credit using the decentralized chain of custody;
transferring the transactable credit to a receiving party; and
recording the transfer of ownership in the decentralized chain of custody, including storing transfer data describing the transfer of ownership in a latest record of the distributed ledger, the latest record also storing a hash value that logically links the latest record to its previous record in the distributed ledger, thereby associating the latest record, through the distributed ledger, with the geolocation data stored in the first record.

11. The computer-readable media of claim 10, wherein the transactable credit is a carbon credit or carbon offset reflecting carbon sequestration by the physical asset, and wherein the physical asset is a parcel of land or one or more plants on the parcel of land; or
wherein the operations further comprise, prior to generating the transactable credit, verifying that another transactable credit for the physical asset is not tracked in the credit transaction platform.

12. A computer system that implements a distributed ledger trust network ("DLTN"), the computer system comprising one or more processors and one or more computer-readable storage media having stored therein computer-executable instructions for causing the one or more processors, when programmed thereby, to perform operations comprising:
determining a geolocation of a physical asset based at least in part on a message sent by a client computing device, the physical asset being fixed to the geolocation, the geolocation of the physical asset having been identified (a) using a global positioning system ("GPS") receiver of the client computing device while at the geolocation of the physical asset or (b) by one or more cellular towers in communication with the client computing device while at the geolocation of the physical asset;
storing, across one or more records of the distributed ledger, geolocation data for the physical asset and asset data for the physical asset, wherein the geolocation data is stored in a first record among the one or more records, wherein the asset data is stored in the first record or a different record among the one or more records, and wherein each given record of the one or more records that is after the first record in the distributed ledger stores a hash value for the given record that logically links the given record to its previous record in the distributed ledger, thereby associating the given record, through the distributed ledger, with the geolocation data stored in the first record;
authorizing a transaction involving the physical asset using the geolocation data and the asset data stored in the distributed ledger;
modifying the distributed ledger to store transaction data representing the transaction in the distributed ledger, the transaction data being stored in a latest record of the distributed ledger, the latest record also storing a hash value that logically links the latest record to its previous record in the distributed ledger, thereby associating the latest record, through the distributed ledger, with the geolocation data stored in the first record, wherein the geolocation data, the asset data, and the transaction data form a decentralized chain of custody, stored in the distributed ledger, related to the physical asset;
upon receiving a request to authorize a second transaction involving the physical asset, retrieving the decentralized chain of custody from the distributed ledger; and
determining whether to authorize the second transaction based on the decentralized chain of custody.

13. The computer system of claim 12, wherein the decentralized chain of custody indicates provenance of the physical asset or provenance of a transactable credit related to the physical asset.

14. The computer system of claim 12 or 13, wherein the transaction is an establishment of the physical asset as a carbon credit or carbon offset, wherein the physical asset is a parcel of land or one or more plants on the parcel of land.

15. The computer system of claim 12 to 14, wherein the determining whether to authorize the second transaction comprises determining an ownership or a redemption history from the decentralized chain of custody; or
wherein the operations further comprise authorizing the second transaction upon determining that the decentralized chain of custody confirms ownership or a redemption status of either the physical asset or a transactable credit related to the physical asset; or
wherein the operations further comprise rejecting the second transaction upon determining that the decentralized chain of custody does not confirm ownership or a redemption status of the physical asset or a transactable credit related to the physical asset; or
wherein the client computing device is a smartphone, feature phone, or other mobile computing device, and wherein the distributed ledger is a permissioned blockchain.
